(19) Europäisches Patentamt / European Patent Office / Office européen des brevets

(11) **EP 3 473 958 B1**

(12) **EUROPÄISCHE PATENTSCHRIFT**

(45) Veröffentlichungstag und Bekanntmachung des Hinweises auf die Patenterteilung:
**20.05.2020   Patentblatt 2020/21**

(51) Int Cl.:
*F25J 3/04* *(2006.01)*

(21) Anmeldenummer: **18020490.1**

(22) Anmeldetag: **10.10.2018**

(54) **MODELLIERUNG EINER DESTILLATIONSKOLONNE BEI BETRIEBSZUSTANDSÄNDERUNGEN**

MODELLING OF A DISTILLATION COLUMN DURING CHANGES IN OPERATING STATE

MODÉLISATION D'UNE COLONNE DE DISTILLATION LORS DE MODIFICATIONS D'UN ÉTAT DE FONCTIONNEMENT

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: **18.10.2017   EP 17020477**

(43) Veröffentlichungstag der Anmeldung:
**24.04.2019   Patentblatt 2019/17**

(73) Patentinhaber: **Linde Aktiengesellschaft**
**80331 München (DE)**

(72) Erfinder:
• **Thomas, Ingo**
**82041 Oberhaching (DE)**
• **Wunderlich, Bernd**
**82319 Starnberg (DE)**

(74) Vertreter: **Imhof, Dietmar**
**Linde AG**
**Technology & Innovation**
**Corporate Intellectual Property**
**Dr.-Carl-von-Linde-Straße 6-14**
**82049 Pullach (DE)**

(56) Entgegenhaltungen:
• **SELIGER B ET AL: "Modelling and dynamics of an air separation rectification column as part of an IGCC power plant", SEPARATION AND PURIFICATION TECHNOLOGY, ELSEVIER SCIENCE, AMSTERDAM, NL, Bd. 49, Nr. 2, 15. April 2006 (2006-04-15) , Seiten 136-148, XP028035316, ISSN: 1383-5866, DOI: 10.1016/J.SEPPUR.2005.09.007 [gefunden am 2006-04-15]**
• **HANKE R ET AL: "DYNAMIC SIMULATION OF A LOW-TEMPERATURE RECTIFICATION COLUMN AS PART OF AN IGCC POWER PLANT", CHEMICAL ENGINEERING AND TECHNO, WEINHEIM, DE, Bd. 26, Nr. 11, 1. Januar 2003 (2003-01-01), Seiten 1126-1130, XP009064861, ISSN: 0930-7516, DOI: 10.1002/CEAT.200303033**
• **BIAN S ET AL: "Compartmental modeling of high purity air separation columns", COMPUTERS & CHEMICAL ENGINEERING, PERGAMON PRESS, OXFORD, GB, Bd. 29, Nr. 10, 15. September 2005 (2005-09-15), Seiten 2096-2109, XP027759852, ISSN: 0098-1354 [gefunden am 2005-09-15]**
• **ROFFEL B ET AL: "FIRST PRINCIPLES DYNAMIC MODELLING AND MULTIVARIABLE CONTROL OF A CRYOGENIC DISTILLATION PROCESS", COMPUTERS & CHEMICAL ENGINEERING, PERGAMON PRESS, OXFORD, GB, Bd. 24, Nr. 1, 1. Januar 2000 (2000-01-01) , Seiten 111-123, XP000972275, ISSN: 0098-1354, DOI: 10.1016/S0098-1354(00)00313-6**

**Beschreibung**

Die Erfindung betrifft ein Verfahren zum Bestimmen eines Zustands einer Destillationskolonne mit mehreren Kolonnenstufen zur Zerlegung eines Einsatzfluidstroms in einzelne Fluidkomponenten.

Hintergrund der Erfindung

Ein typischer Vertreter der Zerlegung eines Einsatzfluidstroms in einzelne Fluidkomponenten ist die Luftzerlegung. Die Herstellung von Luftprodukten in flüssigem oder gasförmigem Zustand durch Tieftemperaturzerlegung von Luft in (kryogenen) Luftzerlegungsanlagen (engl. air separation unit, ASU) ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Luftzerlegungsanlagen weisen Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand (beispielsweise flüssigem Sauerstoff, LOX, gasförmigem Sauerstoff, GOX, flüssigem Stickstoff, LIN und/oder gasförmigem Stickstoff, GAN), also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein. Destillationssäulen werden auch als Destillationskolonnen bezeichnet.

Luftzerlegungsanlagen werden üblicherweise statisch (oder allenfalls mit einer sehr geringen Dynamik) betrieben. Dabei wird ein Einsatzluftstrom mittels eines Hauptluftverdichters angesaugt und verdichtet. Die Verdichterleistung wird üblicherweise konstant auf dem Betriebspunkt gehalten, für den die Anlage ausgelegt ist.

Seliger et al.: "Modelling and dynamics of an air separation rectification column as part of an IGCC power plant", Separation and Purification Technology 49 (2006), Seiten 136-148, Elsevier Science, Amsterdam, beschreibt die Modellierung einer Destillationssäule in einem stationären Zustand.

Offenbarung der Erfindung

Ausgehend von diesem Stand der Technik wird ein Verfahren zum Bestimmen eines Zustands einer Destillationskolonne mit mehreren Kolonnenstufen zur Zerlegung eines Einsatzfluidstroms in einzelne Fluidkomponenten mit den Merkmalen des Patentanspruchs 1 vorgeschlagen. Vorteilhafte Ausführungsformen sind jeweils Gegenstand der Unteransprüche sowie der nachfolgenden Beschreibung.

Ein Aspekt der Erfindung betrifft ein solches Verfahren, dem ein neuartiges Modell einer Destillationskolonne zugrunde liegt, wobei der Zustand in Abhängigkeit von zwischen benachbarten Kolonnenstufen herrschenden Drücken bestimmt wird. Ein auf diese Weise bestimmter Zustand ist insbesondere charakterisiert durch eine Temperatur und/oder Fluidkomponentenkonzentrationen für jede Kolonnenstufe, welche somit vorzugsweise ebenfalls berücksichtigt werden.

Die Erfindung ermöglicht, eine Destillationskolonne und damit insbesondere eine Luft- bzw. allgemein Fluidzerlegungsanlage in einem dynamischen Zustand, d.h. insbesondere während des Verschwindens oder Entstehens einer gasförmigen oder flüssigen Strömung, zu simulieren und basierend auf den Ergebnissen dann insgesamt nicht mehr nur statisch, sondern dynamisch z.B. mit variabler Verdichterleistung zu betreiben. Dadurch kann insbesondere auf variierenden Bedarf und auf schwankende Energiepreise (auch für Regelenergie, d.h. die Energie, die ein Netzbetreiber benötigt, um unvorhergesehene Leistungsschwankungen in seinem Stromnetz auszugleichen) als Beispiele für Kostengrößen gezielt reagiert werden.

Beispielsweise schwanken mittlerweile Energiepreise über die Zeit teilweise sehr stark, so dass der statische Betrieb von Fluidzerlegungsanlagen aus wirtschaftlicher Sicht nicht mehr optimal ist. Jedoch waren bisher keine Methoden bekannt, um das Verhalten der Anlage bei einem schwankenden und dabei insbesondere einem ganz ausbleibenden bzw. neu einsetzenden Einsatzfluidstrom genau genug vorhersagen zu können. Insbesondere stellen sich Fragen nach der Betreibbarkeit, einer maximalen Lastwechselgeschwindigkeit, Auswirkungen auf die Lebensdauer der Anlage, einer optimalen Steuerung und einem Einfluss auf die Produktqualität.

Eine wesentliche Komponente für die Dynamik einer Fluidzerlegungsanlage sind die Destillationskolonnen. Diese Apparate stellen nicht nur Speicher für Masse und Energie dar (welche durch Verzögerungsglieder gut abzubilden sind), sondern zeigen ein hochgradig nichtlineares Zusammenspiel von Temperatur-, Konzentrations-, Druck- und Belastungsprofilen mit dem (über die Kolonnenhöhe verteilten) Speichervolumen. Um dieses Verhalten simulationstechnisch abzubilden, ist eine Reihe von Herausforderungen zu bewältigen:

- Die Initialisierung / Startwertrechnung einer Kolonne ist schon im einfacheren Falle des stationären Kolonnenmodells schwierig.
- Die Gleichungen für das Phasengleichgewicht (Isofugazitätsgleichungen) müssen bzgl. des Verschwindens einer Phase stabilisiert werden.

- Die Gleichungen für das hydrostatische Ablaufen (1D-Impulsbilanzen) müssen ebenfalls bzgl. des "Trockenlaufens" stabilisiert werden.
- Ströme innerhalb des Anlagenmodells müssen bei extremen Betriebsfällen zu Null werden oder auch die Strömungsrichtung wechseln.

Die Erfindung bedient sich dazu eines neuen Ansatzes für die Modellierung einer Destillationskolonne mit mehreren Kolonnenstufen auf Basis einer rigorosen dynamischen thermohydraulischen Simulation einer Destillationskolonne mit Berücksichtigung zeitvariabler Parameter. Dabei werden die einzelnen Kolonnenstufen (üblicherweise sog. Packungen oder Böden) als Gleichgewichtsstufen modelliert. Es handelt sich um einen gleichungsbasierten Simulationsansatz, bei dem die Lösung der Modellgleichungen simultan mit einem adaptierten Newton-Verfahren (siehe z.B. Hanke-Bourgeois, Martin: Grundlagen der numerischen Mathematik und des wissenschaftlichen Rechnens. Studium. Vieweg + Teubner, Wiesbaden, 3., aktualisierte Auflage, 2009) erfolgt. Zur Bestimmung der zeitlichen Änderung der Betriebsbedingungen bzw. des Zustands wird vorzugsweise ein Rückwärtsdifferenzen-Verfahren mit einer Prädiktor-Korrektor-Methode angewandt, bei der zuerst eine Näherungslösung des Gleichungssystems für den Zeitschritt n+1 erzeugt wird (vgl. BDF-Verfahren (englisch Backward Differentiation Formulas)). Die Näherungslösung kann über ein Polynom ermittelt werden, dessen Koeffizienten aus dem aktuellen Zeitschritt n und dem vorherigen Zeitschritt n-1 gewonnen werden. Die Bestimmung von Schätzwerten der zeitlich variablen Prozessgrößen erfolgt für den Zeitschritt n+1 folglich durch Extrapolation der Polynomfunktion. Mit diesen extrapolierten Startwerten wird in einem zweiten Schritt die exakte Korrektur der Lösung über das oben genannte Newton-Verfahren durchgeführt. Es sei der Vollständigkeit halber erwähnt, dass auch andere Integrationsverfahren verwendet werden können. Eine dynamische Optimierung des Kolonnenbetriebs könnte z.B. auch mit einem Kollokationsverfahren durchgeführt werden.

Im Gegensatz zur klassischen Verfahrenstechnik werden dabei jedoch im Modell alle - sowohl gasförmigen als auch flüssigen - Fluidbewegungen durch eine treibende Totaldruckdifferenz hervorgerufen. Bei diesem, als druckgetrieben bezeichneten Ansatz werden alle Strömungswege über Widerstandsbeiwerte $R$ und Leitwerte $C$ charakterisiert. Vorteilhafterweise bedient sich die Erfindung dabei einer neuartigen Herangehensweise, bei der ein quasi-linearer Ansatz der Form

$$C \cdot \Delta p = R \cdot \dot{N}$$

verfolgt wird. Mit diesem Zusammenhang werden die spezifischen Größen von Fluidinhalten in einem Bilanzelement auf den tatsächlichen Fluss zwischen unterschiedlichen Bilanzräumen skaliert. Je nach Modellgleichung kann es numerisch vorteilhafter sein, einen $R$- oder $C$-Wert zu bestimmen bzw. den linearen Ansatz durch Implementierung eines stoffstromabhängigen Werts ($R/C = f(\dot{N})$) auf einen nichtlinearen Zusammenhang zu erweitern, sprich sowohl $R$ als auch $C$ können Funktionen des Zustands sein. Insbesondere erhält man dadurch ein Druck-Fluss-System, das global linear ist und auch für Nullströmungen verwendbar ist. Die strömenden Stoffmengen $\dot{N}$ zwischen zwei Knoten (hier Kolonnenstufen) in einem Drucknetzwerk stellen sich dabei über die Totaldruckdifferenz $\Delta p$ zwischen diesen zwei Knoten ein. Der Widerstandsbeiwert $R$ kann sowohl im einfachsten Fall konstant sein, als auch im nichtlinearen Fall über die sich ergebenden Prozessgrößen bestimmt werden. Über den Leitwert $C$ kann eine Nullströmung selbst bei anliegender Totaldruckdifferenz simuliert werden, was für eine korrekte Abbildung der hydrodynamischen Vorgänge im System notwendig sein kann. Mit diesem Ansatz und einer Linearisierung des Druck- und Flusszusammenhangs können Nullströmung wie auch Strömungsumkehr stabil berechnet werden. Zur Abbildung dieser Vorgänge muss ein Prozessstrom nicht mehr explizit, also als Liste der Komponentenströme und des Enthalpiestroms gegeben sein, sondern liegt implizit als Fluss-Funktion, die den Fluss durch eine gedachte Membran als Funktion der Zustände links und rechts davon beschreibt, vor. Die Erfindung stellt somit ein Modell vor, das den kompletten Betriebsbereich einer Destillationskolonne darstellen kann, so dass neben stationären auch dynamische Zustände, insbesondere während eines Wechsels von einer Fluidbewegung auf eine Nullströmung, während eines Wechsels von einer Nullströmung auf eine Fluidbewegung, während eines Wechsels einer einphasigen Gasströmung auf eine zweiphasige Rektifikation oder während eines Wechsels einer zweiphasigen Rektifikation auf eine einphasige Gasströmung, bestimmt werden können.

Ein weiterer Aspekt der Erfindung betrifft ein Verfahren zum Betreiben einer Destillationskolonne, insbesondere als Teil einer Fluidzerlegungsanlage, bei dem anhand des obigen Modells der Destillationskolonne für wenigstens eine Stellgröße, wie z.B. eine Einsatzfluidstromdurchflussrate oder Verdichterleistung, ein einzustellender Stellgrößenwert in Abhängigkeit von wenigstens einer Regelgröße ermittelt und eingestellt wird. Bei der Regelgröße kann es sich insbesondere um eine Produktqualität, einen Produktvolumen-oder-massenstrom handeln.

Dabei handelt es sich im Prinzip um eine sog. modellprädiktive Regelung (engl. modell predictive control, MPC). Bei der MPC wird ein zeitdiskretes dynamisches Modell des zu regelnden Prozesses verwendet, um das zukünftige Verhalten des Prozesses in Abhängigkeit von den Eingangssignalen zu berechnen. Dies ermöglicht die Berechnung von - im Sinne einer Gütefunktion - optimalen Eingangssignalen, die zu optimalen Ausgangssignalen führen. Dabei können gleichzeitig Eingangs-, Ausgangs- und Zustandsbeschränkungen berücksichtigt werden. Wie nachfolgend erläutert wird, kann es sich bei der Regelgröße insbesondere auch um eine Kostengröße handeln.

Eine Weiterbildung dieses Aspekts betrifft ein Verfahren zum Betreiben einer Destillationskolonne, insbesondere als Teil einer Fluidzerlegungsanlage, bei dem eine Durchflussrate, insbesondere eine Volumendurchflussrate, des Einsatzfluidstroms, insbesondere mittels Ansteuerung einer Verdichtereinheit, in Abhängigkeit von wenigstens einer Kostengröße vorgegeben wird. Als Kostengröße sind insbesondere ein Energiebedarf, ein Produktbedarf, eine Produktqualität, eine Eduktverfügbarkeit, eine Anlagenbelastung bzw. - Lebensdauer usw. zu verstehen, d.h. Größen, auf die hin der Betrieb der Anlage optimiert werden soll (der Wert der Größe soll z.B. eine gewisse Schwelle nicht über- oder unterschreiten und/oder möglichst groß oder möglichst klein werden). Insbesondere sollen auch mehrere solcher Randbedingungen gleichzeitig eingehalten werden, so dass eine Mehrgrößenregelung bzw. -optimierung vorliegt.

Eine erfindungsgemäße Recheneinheit ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen

Figur 1 zeigt schematisch in einem Blockdiagramm eine Luftzerlegungsanlage mit Destillationskolonnen, wie sie der Erfindung zugrunde liegen kann.

Figur 2 zeigt schematisch eine Überführung einer Destillationskolonne bzw. -säule mit mehreren Stufen in ein Modell mit entsprechenden Gleichgewichtsstufen.

Figur 3 zeigt schematisch das Modell einer einzelnen Gleichgewichtsstufe; links: getrennter Bilanzraum; rechts: zusammengefasstes Bilanzvolumen.

Figur 4 zeigt schematisch einen Verteiler in einem Kolonnenabschnitt.

Figur 5 zeigt die vier möglichen Strömungszustände in einer Stufe:

links: reine Gasströmung,
halb links: Flüssigkeitsansammlung,
halb rechts: Flüssigkeitsdurchbruch,
rechts: stationäre Strömung.

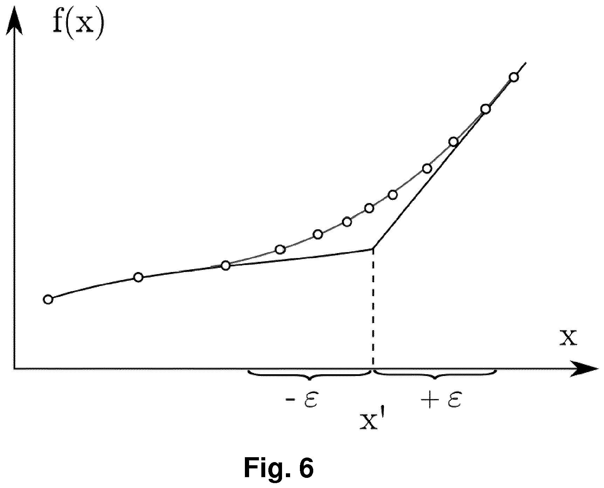

Figur 6 veranschaulicht eine Regularisierung anhand des Verhaltens eines Rückwärtsdifferenzenverfahrens.

Ausführliche Beschreibung der Zeichnungen

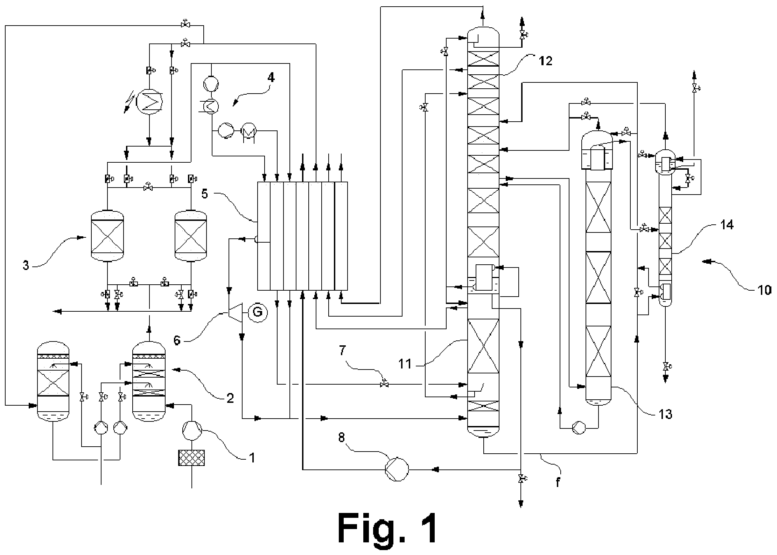

Die der Erfindung zugrunde liegende Trennung von Fluidkomponenten, wie z.B. die Gewinnung von Sauerstoff, Stickstoff und gewünschtenfalls weiterer Stoffen, wie z.B. Argon, erfolgt in einer Fluidzerlegungsanlage, wie z.B. einer herkömmlichen Luftzerlegungsanlage, wie beispielsweise in Figur 1 gezeigt. Hierbei wird der Ausgangsstoff Luft abgekühlt und in ein Rektifikationssystem aufweisend ein Kolonnensystem geleitet, das eine ausreichend große Stoffaustauschfläche zur Verfügung stellt.

Luftzerlegungsanlagen der gezeigten Art sind vielfach an anderer Stelle beschrieben, beispielsweise bei H.-W. Häring (Hrsg.), Industrial Gases Processing, Wiley-VCH, 2006, insbesondere Abschnitt 2.2.5, "Cryogenic Rectification". Für detaillierte Erläuterungen zu Aufbau und Funktionsweise sei daher auf entsprechende Fachliteratur verwiesen. Eine Luftzerlegungsanlage zum Einsatz der vorliegenden Erfindung kann auf unterschiedlichste Weise ausgebildet sein.

Die in Figur 1 beispielhaft gezeigte Luftzerlegungsanlage verfügt unter anderem über einen Hauptluftverdichter 1, eine Vorkühleinrichtung 2, ein Reinigungssystem 3, eine Nachverdichteranordnung 4, einen Hauptwärmetauscher 5, eine Entspannungsturbine 6, eine Drosseleinrichtung 7, eine Pumpe 8 und ein Destillationssäulensystem 10. Das Destillationssäulensystem 10 umfasst im dargestellten Beispiel eine klassische Doppelsäulenanordnung aus einer Hochdrucksäule 11 und einer Niederdrucksäule 12 sowie eine Rohargonsäule 13 und eine Reinargonsäule 14.

In der Luftzerlegungsanlage 100 wird ein Einsatzluftstrom mittels des Hauptluftverdichters 1 über ein nicht bezeichnetes Filter angesaugt und verdichtet. Der verdichtete Einsatzluftstrom wird der mit Kühlwasser betriebenen Vorkühleinrichtung 2 zugeführt. Der vorgekühlte Einsatzluftstrom wird in dem Reinigungssystem 3 aufgereinigt. In dem Reinigungssystem 3, das typischerweise ein Paar von im Wechselbetrieb eingesetzten Adsorberbehältern umfasst, wird der vorgekühlte Einsatzluftstrom weitgehend von Wasser und Kohlendioxid befreit.

Stromab des Reinigungssystems 3 wird der Einsatzluftstrom in zwei Teilströme aufgeteilt. Einer der Teilströme wird auf dem Druckniveau des Einsatzluftstroms in dem Hauptwärmetauscher 5 vollständig abgekühlt. Der andere Teilstrom wird in der Nachverdichteranordnung 4 nachverdichtet und ebenfalls in dem Hauptwärmetauscher 5 abgekühlt, jedoch nur auf ein Zwischentemperaturniveau. Dieser sogenannte Turbinenstrom wird nach der Abkühlung auf das Zwischentemperaturniveau mittels der Entspannungsturbine 6 auf das Druckniveau des vollständig abgekühlten Teilstroms entspannt, mit diesem vereinigt, und in die Hochdrucksäule 11 eingespeist.

In der Hochdrucksäule 11 werden eine sauerstoffangereicherte flüssige Sumpffraktion sowie eine stickstoffangereicherte gasförmige Kopffraktion gebildet. Die sauerstoffangereicherte flüssige Sumpffraktion wird aus der Hochdrucksäule 11 abgezogen, teilweise als Heizmedium in einem Sumpfverdampfer der Reinargonsäule 14 verwendet und jeweils in definierten Anteilen in einen Kopfkondensator der Reinargonsäule 14, einen Kopfkondensator der Rohargonsäule 13 sowie die Niederdrucksäule 12 eingespeist. In den Verdampfungsräumen der Kopfkondensatoren der Rohargonsäule 13 und der Reinargonsäule 14 verdampfendes Fluid wird ebenfalls in die Niederdrucksäule 12 überführt.

Vom Kopf der Hochdrucksäule 11 wird das gasförmige stickstofffreie Kopfprodukt abgezogen, in einem Hauptkondensator, der eine wärmetauschende Verbindung zwischen der Hochdrucksäule 11 und der Niederdrucksäule 12 herstellt, verflüssigt, und in Anteilen als Rücklauf auf die Hochdrucksäule 11 aufgegeben und in die Niederdrucksäule 12 entspannt.

In der Niederdrucksäule 12 werden eine sauerstoffreiche flüssige Sumpffraktion sowie eine stickstoffreiche gasförmige Kopffraktion gebildet. Erstere wird teilweise in der Pumpe 8 flüssig auf Druck gebracht, in dem Hauptwärmetauscher 5 erwärmt, und als Produkt bereitgestellt. Aus einer Flüssigkeitsrückhalteeinrichtung am Kopf der Niederdrucksäule 12 wird ein flüssiger stickstoffreicher Strom abgezogen und als Flüssigstickstoffprodukt aus der Luftzerlegungsanlage 100 ausgeführt werden. Ein vom Kopf der Niederdrucksäule 12 abgezogener gasförmiger stickstoffreicher Strom wird durch den Hauptwärmetauscher 5 geführt und als Stickstoffprodukt auf dem Druck der Niederdrucksäule 12 bereitgestellt. Aus der Niederdrucksäule 12 wird ferner ein Strom aus einem oberen Bereich abgezogen und nach Erwärmung in dem Hauptwärmetauscher 5 als sogenannter Unreinstickstoff in der Vorkühleinrichtung 2 bzw. nach einer Aufheizung mittels eines elektrischen Heizers in dem Reinigungssystem 3 verwendet.

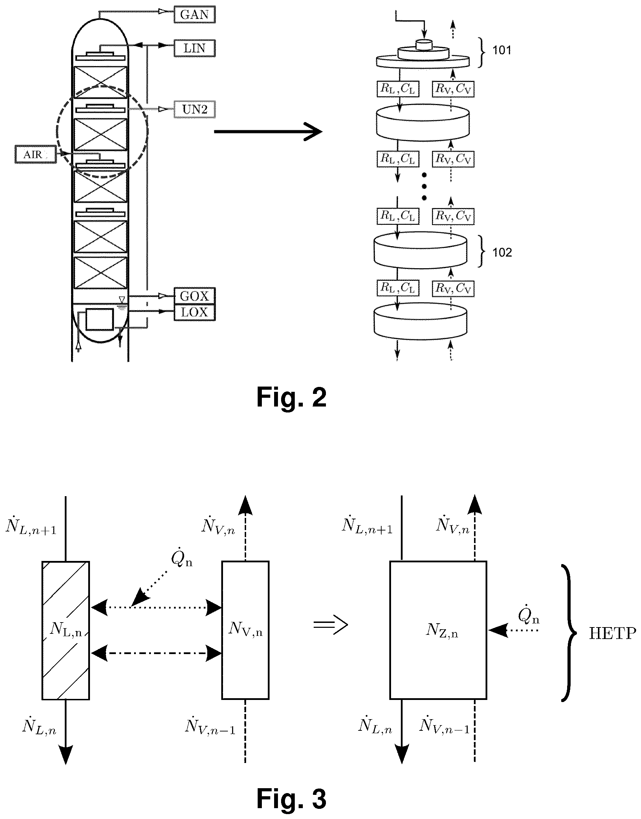

Ein Aufbau einer beispielsweise der Erfindung zugrunde liegenden Destillationskolonne mit mehreren Stufen, wie z.B. der Niederdrucksäule 12 aus Figur 1, sowie eine Überführung in ein Modell mit entsprechenden Gleichgewichtsstufen ist schematisch in Figur 2 dargestellt. Übliche Stufen einer Destillationskolonne weisen einen Verteiler, ein oder mehrere hier als Packungen (oder alternativ Böden) ausgebildete Stufen und einen Sammler auf. Der Verteiler nimmt von oben kommende Flüssigkeit entgegen und führt diese in der Fläche verteilt der (obersten) Packung zu. Umgekehrt strömt Gas aus der Packung über den Verteiler nach oben. Aus der (untersten) Packung austretende Flüssigkeit wird im Sammler gesammelt und nach unten geleitet. Umgekehrt wird das von unten kommende Gas durch den Sammler entgegengenommen und in die darüberliegende Packung geleitet.

Insgesamt wird der Kolonne Luft (AIR) zugeführt und zumindest Sauerstoff und Stickstoff jeweils gasförmig (GOX, GAN) und/oder flüssig (LOX, LIN) entnommen. Weiterhin wird üblicherweise Unreinstickstoff (UN2) abgezogen und gewünschtenfalls Edelgase wie Argon usw.

Bei der Übertragung einer solchen Destillationssäule in ein Modell werden gemäß einer bevorzugten Ausführungsform der Erfindung Modelle 101 für Verteiler und Modelle 102 für Gleichgewichtsstufen, welche einer Packung entsprechen, verwendet. Dabei kann auch ein Sammlermodell durch Adaption der Hydrodynamik in das bestehende Verteilermodell integriert werden. Der Übergang zwischen zwei Stufen bzw. zwischen einer Stufe und einem Verteiler unterliegt dabei Strömungswiderständen $RL$ (Flüssigkeit) und $R_V$ (Gas) sowie Leitwerten $CL$ (Flüssigkeit) und $C_V$ (Gas).

Es sei darauf hingewiesen, dass als Index $L$ für die flüssige Phase, $V$ für die Gasphase, $n$ für die jeweilige Stufe und $j$ für die jeweilige Luftkomponente verwendet werden.

Gemäß dem Kolonnensystem wird ein Modell für eine Gleichgewichtsstufe (siehe Figur 3), in bevorzugter Weiterbildung auch für ein Verteiler- und Sammlersystem, einen Kondensator sowie einen Sumpf (beheizt/unbeheizt) verwendet. Durch einen hierarchischen Modellierungsansatz können diese Teilmodelle anschließend zum gewünschten Gesamtsystem zusammengefügt werden. Die Berechnung der thermischen Stofftrennung erfolgt über hintereinander geschaltete Gleichgewichtsstufen, die eine bestimmte Höhe einer Packung repräsentieren. Die tatsächliche Höhe einer Packung, die genau einer Gleichgewichtsstufe entspricht wird auch HETP-Wert (Heigth Equivalent of a Theoretical Plate) genannt.

Es wird sowohl stoffliches, thermisches als auch mechanisches Gleichgewicht der in der Stufe auftretenden Gas- und Flüssigkeitsströme angenommen. Zur Modellierung der Strömungsvorgänge wird eine instationäre Massen- und Energieerhaltung verwendet. Eine Impulserhaltung wird vorzugsweise quasistationär modelliert. Insgesamt gibt es somit vorzugsweise Speicherterme für Masse und Energie, nicht aber für den Impuls. Impulswellen, also Schallwellen, sind auf einer kleineren Zeitskala und nur in Ausnahmefällen relevant (beispielsweise bei Abschätzung eines Staudrucks).

Das jeder einzelnen der Gleichgewichtsstufen 202 zugrunde liegende Modell ist rechts in Figur 3 gezeigt. Links wird eine konventionelle Modellierung mit getrennten Bilanzvolumina für Gas- ($N_{V,n}$) und Flüssigphase ($N_{L,n}$) und rechts der verwendete Ansatz mit einem Bilanzvolumen $N_{Z,n}$. $\dot{N}$ beschreibt den Molenstrom über die Systemgrenze. Figur 3 zeigt, wie ein aufsteigender Dampfstrom und ein herabrinnender Flüssigkeitsstrom Masse und Energie austauschen. Die entsprechenden Mengen ergeben sich dabei durch die Annahme des Gleichgewichts (statt eines Stoff- und Wärmeübergangsmodells).

Die zeitliche Änderung der Gesamtstoffmenge $N_{Z,n}$ entspricht der Summe der zuströmenden und abströmenden Anteile gemäß:

$$\frac{d}{dt}N_{Z,n} = \dot{N}_{V,n-1} + \dot{N}_{L,n+1} - \dot{N}_{V,n} - \dot{N}_{L,n}$$

Aus der Energieerhaltung folgt, dass sich eine Energieänderung aus einem Wärmestrom, einem technischen Arbeitsstrom und einem zuströmenden und abströmenden Massenstrom zusammensetzt:

$$\frac{dE}{dt} = \frac{dQ}{dt} + \frac{dL_t}{dt} + \sum_{zu}\frac{d}{dt}\left(\dot{N}_{zu} \cdot M_{W,zu}\right)\cdot\left(h_{zu} + \frac{v_{zu}^2}{2} + g \cdot z_{zu}\right) - $$
$$-\sum_{weg}\frac{d}{dt}\left(\dot{N}_{weg} \cdot M_{W,weg}\right)\cdot\left(h_{weg} + \frac{v_{weg}^2}{2} + g \cdot z_{weg}\right)$$

mit

$E$: Energie
$Q$: Wärme
$L_t$: technische Arbeit
$zu, weg$: zuströmende bzw. wegströmende Anteile
N: Molenstrom
$M_W$: Molgewicht
$v$: Geschwindigkeit
$h$: partielle molare Enthalpie
$g$: Erdbeschleunigung
$z$: Höhe

Hierbei können die kinetischen Beiträge $v^2/2$ üblicherweise vernachlässigt werden.

Aus der Impulserhaltung folgt:

$$\frac{d\underline{P}}{dt} = \frac{d}{dt}\int_{\tilde{V}} \rho\underline{u}dV = \sum_i \underline{F}_i$$

mit

$\underline{P}$: Gesamtimpuls
$\rho\underline{u}$: Impulsdichte
$\underline{F}_i$: angreifende Kraft (z.B. Schwerkraft)
$i$: Laufindex

Der Gleichgewichtszustand beinhaltet dabei insbesondere für jede Stufe $n$ ein thermisches Gleichgewicht zwischen Gas und Flüssigkeit, $T_{n,L} = T_{n,V}$, d.h. beide Phasen haben dieselbe Temperatur, ein stoffliches Gleichgewicht, $f''_{n,j} = f'_{n,j}$, d.h. die Fugazität einer Komponente j ist in allen vorliegenden Phasen ($f'$ flüssig und $f''$ gasförmig) gleich, und ein mechanisches Gleichgewicht, $C \cdot \Delta p = R \cdot \dot{N}$, d.h. der Druckunterschied für eine Phase zwischen zwei benachbarten Stufen entspricht dem Produkt aus Strömungswiderstand und Stoffmengenstrom. Für jede Stufe ist dabei die Randbedingung einzuhalten, dass die Summe der Volumina aus Gas $V_{n,V}$ und Flüssigkeit $V_{n,L}$ dem Volumen der Stufe $V_n$ entspricht, $V_{n,L} + V_{n,V} = V_n$.

Anhand der aktuellen Fluidbelastung ergibt sich ein bestimmter Druckverlust und Flüssigkeitsinhalt im System, der über Auslegungskorrelationen, wie z.B. von Kooijman, H.A., K.R. Krishnamurty und M.W. Biddulph: A NEW PRESSURE DROP MODEL FOR STRUCTURED PACKING: 634th Event of the European Federation of Chemical Engineering. GVC - VDI-Society of Chemical and Process Engineering, Germany, 2002, beschrieben, bestimmt wird. Diese berücksichtigen vorteilhafterweise auch das Stauen von Flüssigkeit an den Stoßstellen der Packungslagen bei höheren Kolonnenbelastungen. Zusätzlich ergibt sich daraus der mitbilanzierte gasförmige Fluidinhalt über die Differenz zwischen Kolonnen- und Flüssigkeitsvolumen. Über ein Verteiler- und Sammlersystem können Zu- und Abspeisungen des Rektifikationssystems realisiert sowie die Quervermischung einer Packungskolonne über den Gesamtquerschnitt (Durchmesser bis zu 5m bei Großanlagen) verbessert werden. Mit dem erfindungsgemäßen Modell kann sowohl ein Leer- als auch Überlaufen des Verteilers geschlossen simuliert werden.

Flüssigkeitsinhalt und damit thermische Trägheit befindet sich akkumuliert in jedem Verteiler und Sammlersystem, das oberhalb und unterhalb eines Packungsabschnitts verbaut wird. Diese Einbauten sind notwendig, um die abfließende Flüssigkeit zu sammeln, zu mischen und erneut gleichmäßig auf den darunterliegenden Packungsabschnitt zu verteilen. Dabei kann das Sammlermodell durch Adaption der Hydrodynamik in das bestehende Verteilermodell integriert werden, d.h. Sammler und Verteiler zwischen zwei Stufen werden vorzugsweise gemeinsam modelliert.

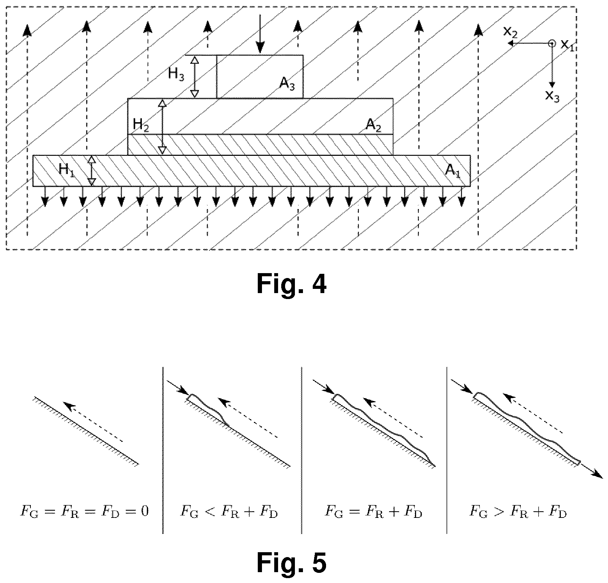

Interpretiert werden kann ein Verteiler als ein Behälter mit unterschiedlichen Querschnittsflächen, in denen sich Flüssigkeit aufstauen kann, wie er in einer Schnittansicht in Figur 4 gezeigt ist. Der gesamte Kolonnenabschnitt ist durch die äußere gestrichelte Linie definiert. Die Flüssigkeit läuft, wie mit den durchgezogenen Pfeilen gekennzeichnet, von oben durch die Querschnittsflächen $A_3$ bis $A_1$, das Gas strömt entgegengesetzt, wie mit den gestrichelten Pfeilen gekennzeichnet, nach oben.

Der oberste Querschnitt $A_3$ entspricht dem Zulaufkanal aus dem darüberliegenden Sammler oder einem Zuspeisestutzen aus der Kolonnenwand. Dieser mündet in einen größeren Querschnitt $A_2$, der die Flüssigkeit ein erstes Mal über die Kolonnenfläche verteilt. In diesem Querschnitt ist die Flüssigkeit im normalen Betrieb frei gespiegelt und der Füllstand schwankt je nach Flüssigkeitsbelastung. Unter diesem Abschnitt befinden sich weitere Kanäle, die die Querschnittsfläche $A_1$ einnehmen.

An der Unterseite dieser Flächen sind kleinere Bohrungen angebracht, die für eine definierte Aufgabe der Flüssigkeit auf die darunterliegende Packung sorgen. Diese Bohrungen stellen eine Einschnürung der Flüssigkeitsströmung dar. Die entgegenströmende Gasphase wird durch die Querschnittsfläche $A_1$ verengt, um anschließend wieder über den gesamten Kolonnenquerschnitt in die darüberliegende Packungslage einzutreten, weshalb ein Druckverlust entsteht.

Der Flüssigkeitsstand (in $A_1$ und $A_2$) ist eng schräg schraffiert, das von Gas erfüllte Volumen (Rest) ist weit schräg schraffiert.

Prinzipiell erfolgt die Modellierung des Verteilers ähnlich zum Modellansatz der Gleichgewichtsstufe, weshalb nachfolgend nur auf die Unterschiede eingegangen wird. Für den Widerstandsbeiwert der Gasphase wird ein konstanter Wert angenommen, der an Erfahrungswerte oder Messdaten angepasst wird. Diese Vereinfachung wird aufgrund des geringen Druckverlustes der langsam strömenden Gasphase und einer konstanten Kanalgeometrie getroffen. Als Anhaltswert kann der Widerstandsbeiwert in etwa gleich dem einer Gleichgewichtsstufe gesetzt werden. Zwischen Gas- und Flüssigphase findet in einem Verteiler kein Stofftransport statt, da die spezifische Phasengrenzfläche im Vergleich zu einer theoretischen Gleichgewichtsstufe in etwa um den Faktor 1.500 kleiner ist. Somit kann auch die Massen- und Energieerhaltung nicht über den Bruttoinhalt des gesamten Kolonnenabschnitts bilanziert werden, sondern erfolgt getrennt für die beiden Phasen.

Die Konzentration des abfließenden Gas- und Flüssigkeitsstroms ist dadurch immer gleich der Konzentration des entsprechenden Fluidinhalts. Im Gegensatz zur Gleichgewichtsstufe entsteht durch die geänderte Wahl der Bilanzierung folgender Sachverhalt:

Bei einem Anfahrvorgang aus dem warmen, trockenen Zustand ist das Flüssigvolumen $NL$ des Verteilermodells nicht vorhanden. Eine implizite Druckbestimmung über einen Abgleich von Fluidinhalt- und Behältervolumen kann für die Flüssigphase daher nicht erfolgen. Darüber hinaus wäre dies mit sehr hohen Gradienten durch die Inkompressibilität von Flüssigkeiten verbunden. Daher wird für das flüssige Bilanzelement von einer isochoren auf eine isobare Betrachtung gewechselt. Der Druck der Flüssigkeit wird gleich dem Druck der Gasphase gesetzt, die sich um den Verteiler befindet.

Bei ansteigender Flüssigkeitsmenge verdrängt das Flüssigkeitsvolumen einen Teil des Gaspolsters und nimmt einen immer größeren Volumenanteil ein. Durch die variierende Bilanzgröße des Flüssigkeitselements muss zusätzlich technische Arbeit in Form von Volumenänderungsarbeit geleistet werden, die nach Stephan et al.: Thermodynamik. Springer Berlin Heidelberg, Berlin, Heidelberg, 2013. über

$$dLt = -p \cdot dV$$

berechnet wird. Diese Arbeit wird je nach Volumenänderung von einem Bilanzelement geleistet und gleichzeitig vom anderen aufgenommen, da beide den gleichen Druck aufweisen. Die Änderung des Flüssigkeitsvolumens ist von dem aktuellen Füllstand im Verteiler abhängig und es gilt

$$dV = A(H) \cdot dH = \sum_i A_i \cdot \min(\max((H - H_i), 0), (H_{i+1} - H_i))$$

mit $A_i = [A_1, A_2, A_3]$ und $H_i = [0, H_1, H_2, H_3]$ für die vorliegende Verteilergeometrie.

Für die Flüssigkeitsströmung ergibt sich aufgrund des Aufstauens im Behälter ein anderer Zusammenhang für die Hydrodynamik. Unter Vernachlässigung von Reibungskräften für die Flüssigphase in $x_3$-Richtung aus Figur 4 ergibt sich:

$$\rho_L \cdot \left( u_3 \cdot \frac{\partial u_3}{\partial x_3} \right) = -\frac{\partial p}{\partial x_3} + \rho_L \cdot g$$

Die Reibung an der Phasengrenzfläche wird nicht berücksichtigt, da es zu keinem entgegengesetzten Strömen von Gas- und Flüssigphase kommt und diese durch die Metallwand des Verteilers getrennt sind. Ebenso kann die innere Fluidreibung aufgrund des Aufstauens der Flüssigkeit und der verringerten mittleren Geschwindigkeit vernachlässigt werden.

Integriert man obige Gleichung in $x_3$-Richtung von der ruhenden Oberfläche der Höhe H bis zum Ausströmquerschnitt an der Unterseite, so ergibt sich

$$\frac{\rho_L}{2} \cdot u_3^2 = \Delta p_V + \rho_L \cdot g \cdot H$$

Für die Strömungsgeschwindigkeit im abfließenden Querschnitt $A_{Loch}$ folgt daraus:

$$u_3 = \sqrt{\frac{2 \cdot \Delta p_V}{\rho_L} + 2 \cdot g \cdot H} \qquad \mit \Delta p_V < 0$$

Diese Formulierung ist gleichbedeutend mit der Ausflussformel von Toricelli bei überlagerter Druckdifferenz $\Delta pV$ durch die aufsteigende Gasströmung.

Für die abfließende Menge aus dem Verteiler folgt

$$\dot{N}_L = \frac{\dot{M}_L}{M_{W,L}} = \frac{\rho_L \cdot u_3 \cdot A_{Loch}}{M_{W,L}} = \frac{\rho_L \cdot \sqrt{2 \cdot g \cdot H + \frac{2 \cdot \Delta p_V}{\rho_L}} \cdot A_{Loch}}{M_{W,L}}$$

Mit dem Ansatz der druckgetriebenen Strömung ergibt sich der Widerstandsbeiwert der Flüssigkeit über:

$$R_L \cdot \dot{N}_L = C_L \cdot (\Delta p_V + \rho_L \cdot g \cdot H)$$

Der Druck wird an dieser Stelle durch den hydrostatischen Druck der aufgestauten Flüssigkeit erhöht.

Der zur Stofftrennung notwendige Flüssigkeitsrücklauf wird über einen Kondensator am Kopf der Kolonne durch Abfuhr von Wärme bereitgestellt. Im Sumpf des Systems befindet sich aufgestaute Flüssigkeit, die durch Wärmezufuhr verdampft werden kann und so einen aufsteigenden Gasstrom erzeugt. Modellierungen für Kondensator und Sumpf sind im Stand der Technik bekannt.

Bedingt durch Anreize der Energiemärkte ist es erwünscht, auch ein komplettes Abschalten des Rektifikationssystems zu betrachten. Problematisch für dieses Szenario ist die Verwendung von stationär bestimmten Auslegungskorrelationen für einen dynamischen Anlaufvorgang. Bei einem warmen Anfahr- oder kalten Wiederanfahrvorgang, der schematisch in Figur 4 dargestellt ist, strömt zuerst eine rein gasförmige Strömung durch das Rektifikationssystem. Hierbei tritt noch keine Konzentrationsänderung über der Kolonnenhöhe auf. (Das Konzentrationsprofil stellt sich im zweiphasigen Betrieb analog zum Temperaturprofil ein. Die Kolonne ist unten warm und oben kalt, für das Konzentrationsprofil reichert sich der Leichtsieder (tiefster Siedepunkt) am Kopf und der Schwersieder im Sumpf an). Bildet sich Flüssigkeit in einer Gleichgewichtsstufe, so akkumuliert sich diese zuerst, bevor sie in die darunterliegende Stufe abfließt und sich anschließend ein stationärer Betrieb einstellt.

Um diesen Vorgang und damit ein belastungsabhängiges Abfließen von Flüssigkeit zu simulieren, wird das Kräftegleichgewicht an einem Fluidfilm betrachtet. Gemäß der Bedingung

$$|F_{\mathrm{G}}| = |F_{\mathrm{R}}| + |F_{\mathrm{D}}|$$

wird ein Kriterium für den Flüssigkeitsdurchbruch in die darunterliegende Gleichgewichtsstufe ermittelt. $F_{\mathrm{G}}$ repräsentiert die Gewichtskraft der Flüssigkeitsmoleküle, die entgegen der Strömungsrichtung des Gases wirkt. Die durch das Gas übertragene Scherkraft auf den Film wird mit $F_{\mathrm{R}}$ bezeichnet. Durch den Druckabfall der Gasströmung infolge von Reibung wirkt zusätzliche eine Druckkraft $F_{\mathrm{D}}$.

Um den Betriebsbereich einer einphasigen Gasströmung bis hin zur zweiphasigen Rektifikation mit einem Modell abbilden zu können, werden vorteilhafterweise auch Bestimmungsgleichungen angepasst. So ist z.B. die Zusammensetzung des austretenden Gasstroms aus einer Gleichgewichtsstufe für den einphasigen Fall gleich der Konzentration des Fluidinhalts im Bilanzelement. Setzt die Rektifikationswirkung bei auftretender Zweiphasigkeit ein, so reichert sich der Leichtsieder in der Gasphase an und es gilt die Stofftrennung anhand der Isofugazitätsbedingung.

Um das numerische Verhalten des Integrators bei diesen Schaltungen zu verbessern, werden vorzugsweise alle Unstetigkeiten im Modell regularisiert. Zur Illustration sei auf Figur 5 verwiesen, wo mit einer durchgezogenen Linie ein Funktionsverlauf f(x) mit einer Knickstelle bei x' gezeigt ist. f(x) könnte z.B. die Abhängigkeit der Dichte von der Enthalpie beschreiben. Im überhitzten (gasförmigen Zustand) ist diese stetig differenzierbar, weist jedoch am Siedepunkt, wo sich die ersten Flüssigkeitsmoleküle bilden, einen Knick auf, da der Dampfanteil unstetig von der Enthalpie abhängt.

Das Resultat einer Regularisierung ist mit Kreisen skizziert. Durch den geglätteten Funktionsverlauf treten keine Knicke auf und die Neubildung der Jakobi-Matrix an einem Schaltpunkt x' ist nicht erforderlich. Die Prädiktion ist für den nächsten Zeitschritt bei einem Wechsel von Gleichungen näher an der gesuchten Lösung.

Der adaptierte Funktionsverlauf wird beispielsweise über einen Homotopieparameter λ gemäß

$$f(x) = (1 - \lambda) \cdot f(x)_{x<x'} + \lambda \cdot f(x)_{x>x'}$$

bestimmt, der die Modellgleichungen ineinander überführt. Der Bereich mit Abweichungen zum ursprünglichen Funktionsverlauf wird Regularisierungsintervall genannt und ist in Figur 5 mit ε bezeichnet.

Beispielsweise kann gemäß einer bevorzugten Ausführungsform ein Viertel einer Sinusschwingung für die Bestimmung des Homotopieparameters verwendet werden, und es gilt:

$$\lambda = \begin{cases} 0 & \text{für} \quad x \le -\varepsilon \\ 0,5 + 0,5 \cdot \sin\left(\frac{\pi}{2} \cdot \frac{x}{\varepsilon}\right) & \text{für} \quad -\varepsilon < x < \varepsilon \\ 1 & \text{für} \quad x \ge \varepsilon \end{cases}$$

Durch diesen Modellansatz lässt sich eine vereinfachte Initialisierungsstrategie mit der Zeit als Homotopieparameter anwenden. Durch die Stabilisierung des Modells für Nullströmungen und den möglichen Wechsel des Aggregatzustands kann das System mit einem ruhenden Gaspolster initialisiert werden. Das Einsetzen der Fluidbewegung und die auftretende Stofftrennung stellen sich entsprechend der Bedingungen der Zuspeiseströme ein. Vorteilhaft ist dies v.a. für die Ermittlung einer stationären Lösung eines gekoppelten Doppelsäulensystems, da keine Konzentrationsprofile im Voraus geschätzt werden müssen.

Grundsätzlich sind zur Stabilisierung des Kolonnenmodells und der Abbildbarkeit einphasiger sowie zweiphasiger Strömungsformen mehrere Anpassungen des Grundmodells zweckmäßig.

Für jeden Wechsel der Berechnungsgleichungen wird vorteilhafterweise eine Regularisierungsfunktion verwendet, die einen stetig differenzierbaren Übergang ermöglicht. Für dieses Konzept ist es vorteilhaft, eine allgemeingültige Schaltgröße zu definieren, mit der die Überblendungsfunktionen aktiviert werden. Für die vorliegende Simulationsaufgabe hat sich das Konzept des generalisierten Dampfanteils als besonders robust herausgestellt, welches gemäß Thomas [125] nachfolgend erläutert wird: Für den Dampfanteil eines Stromvektors gilt generell

$$vf = \frac{h - h'}{h'' - h'}$$

mit der vereinfachenden Schreibweise von $h'$ für die Bedingung "Siedepunkt" und $h''$ für den "Taupunkt". Üblicherweise wird in der Verfahrenstechnik ein Strom, der vollständig flüssig ist, mit dem Dampfanteil $vf = 0$ charakterisiert, $vf = 1$ gilt für einen einphasig gasförmigen Stoff. Der genaue Zustand im Zweiphasengebiet wird analog über einen Dampfanteil $0 < vf < 1$ definiert. Aus numerischen Gründen ist es sinnvoll, auch außerhalb des Zweiphasengebiets eine eindeutige Definition des Zustands des Stromvektors zu verwenden, die stetig differenzierbar ist. Hierfür kann der Dampfanteil über die Phasenwechselpunkte hinaus extrapoliert werden und es gilt für den gesamten Lösungsraum die Definition

$$vf_{\text{gen}} = \frac{h(z, p, T) - h'(x^*, p, T')}{h''(y^*, p, T'') - h'(x^*, p, T')}$$

Durch diese Formulierung nimmt $vf_{gen}$ Werte größer 1 für einen überhitzten, gasförmigen und kleiner 0 für einen einphasigen, unterkühlten Strom an. Dadurch kann ein bevorstehender Phasenwechsel schon vor dem eigentlichen Auftreten detektiert werden und gegebenenfalls Maßnahmen für die Stabilisierung des Modells vor dem eigentlichen Schaltpunkt aktiviert werden.

Für das stetig differenzierbare Überblenden von Modellgleichungen unterschiedlicher Betriebszustände werden Regularisierungsfunktionen verwendet. Als Regularisierungsfunktionen werden alle Funktionen bezeichnet, mit denen der Parameter $\lambda$ zwischen Null und Eins variiert werden kann. Dies führt dazu, dass ein Funktionsverlauf gemäß $f(x) = (1 - \lambda) \cdot f(x)_{x<x'} + \lambda \cdot f(x)_{x>x'}$ abschnittsweise definiert werden kann und in einem bestimmten Bereich ineinander überblendet wird. Die einfachste Funktion, mit welcher der Parameter $\lambda$ bestimmt werden kann, ist eine Geradengleichung.

Für die Gleichgewichtsstufe und das Verteilersystem können vorzugsweise folgende Regularisierungen verwendet werden.

Für die Gleichgewichtsstufe sind dies:

- Phasentrennung für die Gasphase

Die Phasentrennung anhand der Isofugazitätsbedingung wird immer unabhängig vom aktuellen Zustand des Bruttoinhalts im Bilanzelement berechnet. Auch im überhitzten Zustand werden virtuelle Zusammensetzungen aus extrapolierten Fugazitätskoeffizienten bestimmt, die keine physikalische Bedeutung haben. Daher muss die Zusammensetzung der abströmenden Gasphase im einphasigen Fall von den Gleichgewichtskonzentrationen auf die Konzentration der Volumenphase überblendet werden.

- Stabilisierung der Eigenschaften der Flüssigphase

Für die Bestimmung der Zusammensetzung der aus einer Gleichgewichtsstufe abfließenden Flüssigkeit ist ebenfalls eine Fallunterscheidung zwischen trockener und aktiver Packung zu treffen. Aufgrund von hohen Gradienten bei einer Überblendung des unstetigen Verlaufs der Stoffdaten von der Gas- auf die Flüssigphase ist eine Glättung an dieser Stelle nicht zielführend

- Stabilisierung der Auslegungskorrelationen

Zur Beseitigung von Problemen bei der Berechnung von Gradienten für eine Nullströmung wird an dieser Stelle die Übergabe der aktuellen Belastungsparameter für die Berechnung der Auslegungskorrelationen limitiert. Dadurch kann die gewählte Auslegungskorrelation für Packungen durch eine beliebige andere Korrelation ausgetauscht werden, ohne die Modellgleichungen anpassen zu müssen.

Das oben beschriebene Verteilermodell muss sowohl für den trockenen als auch für den Betrieb mit Flüssigkeitsstand rechenbar sein. Im Vergleich zur Gleichgewichtsstufe wird die Bilanzierung der Gas- und Flüssigphase getrennt vorgenommen. Dadurch verschwindet der Flüssigkeitsinhalt für den einphasigen Fall und der Füllstand $H$ im Verteiler ist gleich Null. Aus numerischer Sicht problematisch ist die adaptierte Ausflussbeziehung nach Toricelli mit der Steigung der Wurzelfunktion für $H \to 0$. Die unendliche Steigung für den Funktionswert Null führt zu einer Singularität in der Jakobi-Matrix und der gradientenbasierte Löser versagt. Abhilfe hierfür kann durch Quadrieren von $u_3$ und Ersetzen des Quadrats der Flüssigkeitsgeschwindigkeit über

$$u_3^2 = u_3 \cdot \left( |u_3| + B_1 \cdot \mathrm{e}^{-B_2 \cdot u_3} \right)$$

geschaffen werden. Mit der Wahl des Parameters $B_1$ wird die Steigung d$u$/d$h|h=0$ so bestimmt, dass das Lösungsverfahren konvergiert. Die Abweichung zum ursprünglichen Funktionsverlauf kann über die Wahl des Parameters $B_2$ eingestellt werden. Je größer dieser Wert ist, desto kleiner ist die absolute Abweichung.

**Patentansprüche**

1. Verfahren zum Bestimmen eines Zustands einer Destillationskolonne (12) mit mehreren Kolonnenstufen zur Zerlegung eines Einsatzfluidstroms in einzelne Fluidkomponenten, wobei der Zustand in Abhängigkeit von zwischen benachbarten Kolonnenstufen herrschenden Druckunterschieden mittels eines Modells bestimmt wird, wobei im Modell sowohl die gasförmigen als auch die flüssigen Strömungen zwischen den benachbarten Kolonnenstufen von den zwischen den benachbarten Kolonnenstufen herrschenden Druckunterschieden hervorgerufen werden, wobei im Modell ein die gasförmige Strömung zwischen zwei Kolonnenstufen charakterisierender Stoffmengenstrom $\dot{N}_V$ gegeben ist durch $\dot{N}_V \cdot R_V = C_V \cdot \Delta p_V$ und ein die flüssige Strömung zwischen zwei Kolonnenstufen charakterisierender Stoffmengenstrom $\dot{N}_L$ gegeben ist durch $\dot{N}_L \cdot R_L = C_L \cdot \Delta p_L$, wobei, jeweils für die gasförmige oder flüssige Phase, $\Delta p_{V,L}$ ein Totaldruckunterschied zwischen den zwei benachbarten Kolonnenstufen, $R_{V,L}$ ein Widerstandsbeiwert zwischen den zwei benachbarten Kolonnenstufen und $C_{V,L}$ ein Leitwert der Strömung zwischen den zwei benachbarten Kolonnenstufen sind.

2. Verfahren nach Anspruch 1, wobei mittels des Modells ein Zustand während eines Verschwindens oder Entstehens einer gasförmigen oder flüssigen Strömung bestimmt wird.

3. Verfahren nach Anspruch 2, wobei eine Regularisierungsfunktion verwendet wird, um den Zustand mittels des Modells zu bestimmen.

4. Verfahren nach Anspruch 2 oder 3, wobei das Verschwinden oder Entstehen einer gasförmigen oder flüssigen Strömung einen Wechsel von einer Fluidbewegung auf eine Nullströmung, einen Wechsel von einer Nullströmung auf eine Fluidbewegung, einen Wechsel von einer einphasigen Gasströmung auf eine zweiphasige Rektifikation oder einen Wechsel von einer zweiphasigen Rektifikation auf eine einphasige Gasströmung umfasst.

5. Verfahren nach einem der vorstehenden Ansprüche, wobei im Modell der Zustand durch eine Temperatur und/oder Fluidkomponentenkonzentrationen für jede Kolonnenstufe charakterisiert ist.

6. Verfahren nach einem der vorstehenden Ansprüche, wobei im Modell eine Kolonnenstufe als Gleichgewichtsstufe modelliert wird, wobei ein stoffliches, thermisches und mechanisches Gleichgewicht der der Kolonnenstufe zuströmenden und der von der Kolonnenstufe wegströmenden Fluidkomponenten angenommen wird.

7. Verfahren nach Anspruch 6, wobei zur Modellierung der Strömungsvorgänge eine instationäre Massen- und Energieerhaltung und vorzugsweise eine quasistationäre Impulserhaltung im Modell verwendet werden.

8. Verfahren nach einem der vorstehenden Ansprüche, wobei zur Bestimmung einer zeitlichen Änderung des Zustands ein Rückwärtsdifferenzen-Verfahren mit einer Prädiktor-Korrektor-Methode angewandt wird.

9. Verfahren nach einem der vorstehenden Ansprüche, wobei anhand des bestimmten Zustands für wenigstens eine den Zustand beeinflussende Stellgröße ein einzustellender Stellgrößenwert in Abhängigkeit von wenigstens einer Regelgröße ermittelt und eingestellt wird.

10. Verfahren nach Anspruch 9, wobei die wenigstens eine Regelgröße eine Produktqualität, einen Produktvolumenstrom, einen Produktmassenstrom oder eine Kostengröße umfasst.

11. Computerprogramm, das eine Recheneinheit dazu veranlasst, ein Verfahren nach einem der Ansprüche 1 bis 10 durchzuführen, wenn es auf der Recheneinheit ausgeführt wird.

12. Recheneinheit, in der ein Computerprogramm nach Anspruch 11 gespeichert ist.

13. Maschinenlesbares Speichermedium mit einem darauf gespeicherten Computerprogramm nach Anspruch 11.

14. Fluidzerlegungsanlage, insbesondere Luftzerlegungsanlage, mit einer Recheneinheit nach Anspruch 12.

**Claims**

1. Method for determining a state of a distillation column (12) having a plurality of column stages for separating a feed fluid flow into individual fluid components, wherein the state is determined by means of a model as a function of pressure differences prevailing between adjacent column stages,
wherein, in the model, both the vapor and the liquid flows between the adjacent column stages are caused by the pressure differences prevailing between the adjacent column stages,
wherein, in the model, a molar flow rate $\dot{N}_V$ which characterizes the vapor flow between two column stages is given by $\dot{N}_V \cdot R_V = C_V \cdot \Delta p_V$ and a molar flow rate $\dot{N}_L$ which characterizes the liquid flow between two column stages is given by $\dot{N}_L \cdot R_L = C_L \cdot \Delta p_L$,
wherein, for the vapor or liquid phase in each case, $\Delta p_{V,L}$ is a total pressure difference between the two adjacent column stages, $R_{V,L}$ is a resistance factor between the two adjacent column stages and $C_{V,L}$ is a conductance factor of the flow between the two adjacent column stages.

2. Method according to claim 1, wherein a state during a disappearance or appearance of a vapor or liquid flow is determined by means of the model.

3. Method according to claim 2, wherein a regularization function is used to determine the state by means of the model.

4. Method according to claim 2 or 3, wherein the disappearance or appearance of a vapor or liquid flow comprises a change from a fluid movement to a zero flow, a change from a zero flow to a fluid movement, a change from a single-phase vapor flow to a two-phase rectification, or a change from a two-phase rectification to a single-phase vapor flow.

5. Method according to any of the preceding claims, wherein, in the model, the state is **characterized by** a temperature and/or fluid component concentrations for each column stage.

6. Method according to any of the preceding claims, wherein, in the model, a column stage is modeled as an equilibrium stage, wherein a material, thermal and mechanical equilibrium of the fluid components flowing into the column stage and flowing away from the column stage is assumed.

7. Method according to claim 6, wherein a transient mass and energy conservation and preferably a quasi-stable momentum conservation are used in the model for modeling the flow processes.

8. Method according to any of the preceding claims, wherein a backward differentiation method with a predictor-corrector method is used to determine a temporal change in the state.

9. Method according to any of the preceding claims, wherein, on the basis of the determined state, for at least one control variable influencing the state, a control variable value to be set is ascertained and set as a function of at least one process variable.

10. Method according to claim 9, wherein the at least one process variable comprises a product quality, a product volume flow, a product mass flow, or a cost element.

**11.** Computer program that causes a computing unit to carry out a method according to any of claims 1 to 10 when executed on the computing unit.

**12.** Computing unit in which a computer program according to claim 11 is stored.

**13.** Machine-readable storage medium having a computer program according to claim 11 stored on it.

**14.** Fluid separation system, in particular an air separation system, having a computing unit according to claim 12.

**Revendications**

**1.** Procédé pour déterminer un état d'une colonne de distillation (12) dotée de plusieurs étages de colonne afin de décomposer un flux de fluide d'alimentation en composants de fluide individuels, l'état étant déterminé au moyen d'un modèle en fonction des différences de pression existantes entre les étages de colonne adjacents,
dans le modèle, les écoulements gazeux et liquides entre les étages de colonne adjacents étant provoqués par les différences de pression existantes entre les étages de colonne adjacents,
dans le modèle, un flux de quantité de matière $\dot{N}_V$ caractérisant l'écoulement gazeux entre deux étages de colonne étant donné par $\dot{N}_V \cdot R_V = C_V \cdot \Delta p_V$ et un flux de quantité de matière $\dot{N}_L$ caractérisant l'écoulement liquide entre deux étages de colonne étant donné par $\dot{N}_L \cdot R_L = C_L \cdot \Delta p_L$,
pour chacune de la phase gazeuse ou liquide, $\Delta p_{V,L}$ étant une différence de pression totale entre les deux étages de colonne adjacents, $R_{V,L}$ étant un coefficient de résistance entre les deux étages de colonne adjacents et $C_{V,L}$ étant une conductance de l'écoulement entre les deux étages de colonne adjacents.

**2.** Procédé selon la revendication 1, dans lequel un état pendant la disparition ou la formation d'un écoulement gazeux ou liquide est déterminé à l'aide du modèle.

**3.** Procédé selon la revendication 2, dans lequel une fonction de régularisation est utilisée pour déterminer l'état à l'aide du modèle.

**4.** Procédé selon la revendication 2 ou 3, dans lequel la disparition ou la formation d'un écoulement gazeux ou liquide comprend une modification d'un mouvement de fluide à un écoulement nul, une modification d'un écoulement nul à un mouvement de fluide, une modification d'un écoulement de gaz monophasé à une rectification biphasée ou une modification d'une rectification biphasée à un écoulement gazeux monophasé.

**5.** Procédé selon l'une quelconque des revendications précédentes, dans lequel, dans le modèle, l'état est **caractérisé par** une température et/ou des concentrations de composants de fluides pour chaque étage de colonne.

**6.** Procédé selon l'une quelconque des revendications précédentes, dans lequel, dans le modèle, un étage de colonne est modélisé comme un étage d'équilibre, dans lequel on suppose un équilibre matériel, thermique et mécanique des composants de fluides entrant et sortant les étages de colonne.

**7.** Procédé selon la revendication 6, dans lequel pour la modélisation des processus d'écoulement, une conservation non stationnaire de la masse et de l'énergie et de préférence une conservation quasi-stationnaire de l'impulsion sont utilisées dans le modèle.

**8.** Procédé selon l'une quelconque des revendications précédentes, dans lequel un procédé de différence inverse avec une méthode de prédicteur-correcteur est utilisé pour déterminer une modification temporelle de l'état.

**9.** Procédé selon l'une quelconque des revendications précédentes, dans lequel une valeur de grandeur de réglage à régler est déterminée et réglée en fonction d'au moins une variable de contrôle sur la base de l'état déterminé pour au moins une grandeur de réglage influençant l'état.

**10.** Procédé selon la revendication 9, dans lequel l'au moins une grandeur de réglage comprend une qualité de produit, un débit volumique de produit, un débit massique de produit ou une variable de coût.

**11.** Programme informatique qui conduit une unité de calcul à exécuter un procédé selon l'une quelconque des revendications 1 à 10 lorsqu'il est exécuté sur l'unité de calcul.

**12.** Unité de calcul dans laquelle un programme informatique selon la revendication 11 est enregistré.

**13.** Support de stockage lisible par machine avec un programme informatique selon la revendication 11 enregistré sur celui-ci.

**14.** Installation de décomposition de fluides, en particulier installation de décomposition d'air, dotée d'une unité de calcul selon la revendication 12.

**Fig. 1**

**Fig. 2**

**Fig. 3**

**Fig. 4**

$$F_{\mathrm{G}} = F_{\mathrm{R}} = F_{\mathrm{D}} = 0 \qquad F_{\mathrm{G}} < F_{\mathrm{R}} + F_{\mathrm{D}} \qquad F_{\mathrm{G}} = F_{\mathrm{R}} + F_{\mathrm{D}} \qquad F_{\mathrm{G}} > F_{\mathrm{R}} + F_{\mathrm{D}}$$

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Industrial Gases Processing. Wiley-VCH, 2006
- Modelling and dynamics of an air separation rectification column as part of an IGCC power plant. **SELIGER et al.** Separation and Purification Technology. Elsevier Science, 2006, vol. 49, 136-148
- Grundlagen der numerischen Mathematik und des wissenschaftlichen Rechnens. **HANKE-BOURGEOIS, MARTIN.** Studium. Vieweg + Teubner, 2009
- **KOOIJMAN, H.A. ; K.R. KRISHNAMURTY ; M.W. BIDDULPH.** A NEW PRESSURE DROP MODEL FOR STRUCTURED PACKING: 634th Event of the European Federation of Chemical Engineering. *GVC - VDI-Society of Chemical and Process Engineering,* 2002
- **STEPHAN et al.** Thermodynamik. Springer Berlin Heidelberg, 2013